# EUROPÄISCHE PATENTSCHRIFT

(11) **EP 2 433 759 B1**
(45) Veröffentlichungstag und Bekanntmachung des Hinweises auf die Patenterteilung: **19.04.2017**
(21) Anmeldenummer: 11181190.7
(22) Anmeldetag: 14.09.2011
(51) Int. Cl.: B25F 5/00, B24B 55/05, B24B 55/10, B25F 5/02, B23Q 11/00, B23D 59/00, B23Q 11/06, B23Q 11/08

(54) **Handgeführtes Elektrowerkzeuggerät mit einem Absaugadapter**
Handheld electric tool with a suction adapter
Outil électrique manuel doté d'un adaptateur d'aspiration

(30) Priorität: 24.09.2010 DE 102010041352
(43) Veröffentlichungstag der Anmeldung: 28.03.2012
(73) Patentinhaber: HILTI Aktiengesellschaft, 9494 Schaan (LI)
(72) Erfinder: Looser, Markus, 86899 Landsberg (DE); Baxivanelis, Konstantin, 86916 Kaufering (DE); Haas, Günter, 86916 Kaufering (DE); Link, Bernhard, 86986 Schwabbruck (DE)
(74) Vertreter: Hilti Aktiengesellschaft Corporate Intellectual Property

(56) Entgegenhaltungen:
- US-A- 4 184 226
- US-A1- 2006 185 484
- US-B2- 6 612 038

## Beschreibung

Die vorliegende Erfindung betrifft ein handgeführtes Elektrowerkzeuggerät mit den Merkmalen gemäß dem Oberbegriff des Patentanspruchs 1.

Handgeführte Elektrowerkzeuge, wie eine Handkreissäge, ein Winkelschleifer, ein Trennschleifer oder ein Schlitzgerät, werden sowohl mit einer Absaugeinrichtung als auch ohne Absaugeinrichtung betrieben.

Eine Handkreissäge umfasst ein kreisförmiges Sägeblatt, das von einer Antriebseinheit um eine Drehachse angetrieben wird, und eine Auflageplatte, die auf ein zu bearbeitendes Werkstück aufgelegt wird. Die Spanführung ist bei Handkreissägen wichtig, damit die umher fliegenden Späne nicht zum Bediener fliegen können. Aus diesem Grund sind bogenförmige Schutzabdeckungen um die obere Hälfte des Sägeblatts gezogen. Diese Schutzabdeckungen schließen mit der Auflageplatte ab. Die Unterseite der ebenen Auflageplatte bildet eine Werkstückauflagefläche, mit der die Kreissäge an der Werkstückoberfläche entlang gleitet.

Bekannte Schutzabdeckungen weisen eine Austrittsöffnung für die Späne auf, durch die die Späne vom Sägeblatt nach außen geschleudert werden. Um die Späne von einer Absaugeinrichtung absaugen zu können, ist ein Absaugadapter vorgesehen, der in die Austrittsöffnung der Schutzabdeckung einsetzbar ist und an der Schutzabdeckung geklemmt wird. Die Kreissäge ist mit und ohne Absaugadapter einsetzbar, wobei die Kreissäge mit eingesetztem Absaugadapter nur mit einer Absaugeinrichtung betreibbar ist.

Nachteilig ist, dass der Absaugadapter von der Schutzabdeckung entfernt werden muss, um das Elektrowerkzeuggerät ohne Absaugeinrichtung betreiben zu können. Außerdem besteht die Gefahr, dass der rohrförmige Anschlussabschnitt durch die Späne verstopft.

Die Aufgabe der vorliegenden Erfindung besteht demgegenüber darin, in dem Elektrowerkzeuggerät den Abtransport von Spänen, die das Werkzeug aus dem Werkstück löst, zu verbessern. Außerdem soll der Wechsel zwischen einem Betrieb des Elektrowerkzeuggerätes mit einer Absaugeinrichtung und einem Betrieb des Elektrowerkzeuggerätes ohne Absaugeinrichtung für den Bediener vereinfacht werden.

Diese Aufgabe wird bei dem eingangs genannten handgeführten Elektrowerkzeuggerät erfindungsgemäß durch die Merkmale des unabhängigen Patentanspruchs 1 gelöst. Vorteilhafte Ausgestaltungen ergeben sich aus den abhängigen Patentansprüchen.

Erfindungsgemäß ist vorgesehen, dass der Absaugadapter eine Führungseinrichtung zur Führung des Materialabtrags aufweist, wobei die Führungseinrichtung eine von der Saugöffnung verschiedene Austrittsöffnung aufweist. Die von der Saugöffnung verschiedene Austrittsöffnung dient als Austrittsöffnung für den Materialabtrag, wenn das Elektrowerkzeuggerät ohne Absaugeinrichtung betrieben wird und reguliert die Luftzufuhr in den Absaugkanal bei Anschluss einer Absaugeinrichtung an den Absaugadapter. Dies hat den Vorteil, dass der Absaugadapter nicht von der Schutzabdeckung entfernt werden muss, wenn das Elektrowerkzeuggerät ohne Absaugeinrichtung betrieben werden soll.

In einer bevorzugten Ausführung ist der Absaugadapter in die Schutzeinrichtung integriert oder fest mit der Schutzeinrichtung verbunden. Dies hat den Vorteil, dass der Absaugadapter unverlierbar mit der Schutzabdeckung verbunden ist und das Elektrowerkzeuggerät immer einsatzbereit ist.

In einer alternativen bevorzugten Ausführung ist der Absaugadapter mit der Schutzeinrichtung lösbar verbindbar. Die Lösbarkeit des Absaugadapters bietet dem Anbieter die Möglichkeit, den Absaugadapter von der Schutzabdeckung zu entfernen, wenn der Absaugadapter beispielsweise den Bearbeitungsprozess behindert.

Besonders bevorzugt weist die Führungseinrichtung einen ersten Führungsabschnitt, der an der Schutzabdeckung angeordnet ist, und einen zweiten Führungsabschnitt, der an dem Absaugadapter angeordnet ist und die Austrittsöffnung umfasst, auf. Durch die Ausbildung eines ersten und zweiten Führungsabschnitts wird die Richtung des austretenden Materialabtrags festgelegt. Besonders bevorzugt umfasst der zweite Führungsabschnitt ein Abdeckelement, das ein Volumenelement begrenzt, und eine Leiteinrichtung, die die Richtung des austretenden Materialabtrags festlegt.

In einer bevorzugten Ausführung ist die Austrittsöffnung mittels eines Schiebeelementes verstellbar ausgebildet. Die Verstellbarkeit der Austrittsöffnung bietet dem Bediener die Möglichkeit, bei Anschluss einer Absaugeinrichtung an den Absaugadapter die Luftzufuhr in den Absaugkanal zu regulieren, um ein Verstopfen des Absaugkanals zu verhindern. Außerdem können Absaugeinrichtungen unterschiedlicher Leistungen, die für einen idealen Betriebszustand einen unterschiedlichen Luftstrom erfordern, eingesetzt werden, da der Luftstrom über die verstellbare Austrittsöffnung angepasst werden kann.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fig. 1: eine Seitenansicht einer erfindungsgemässen Handkreissäge;
- Fig. 2: die Schutzabdeckung der Handkreissäge mit einem erfindungsgemässen Absaugadapter, der in eine Austrittsöffnung eingesetzt und mit der Schutzabdeckung verbunden ist;
- Fign. 3A, B: den Absaugadapter in einer Seitenansicht (Fig. 3A) und in einem Schnitt entlang der Linie A-A (Fig. 3B); und
- Fign. 4A, B: eine alternative Ausführungsform des Absaugadapters mit einer verschliessbaren Austrittsöffnung in einer ersten Position mit maximaler Austrittsöffnung (Fig. 4A) und in einer Zwischenposition mit verkleinerter Austrittsöffnung (Fig. 4B).

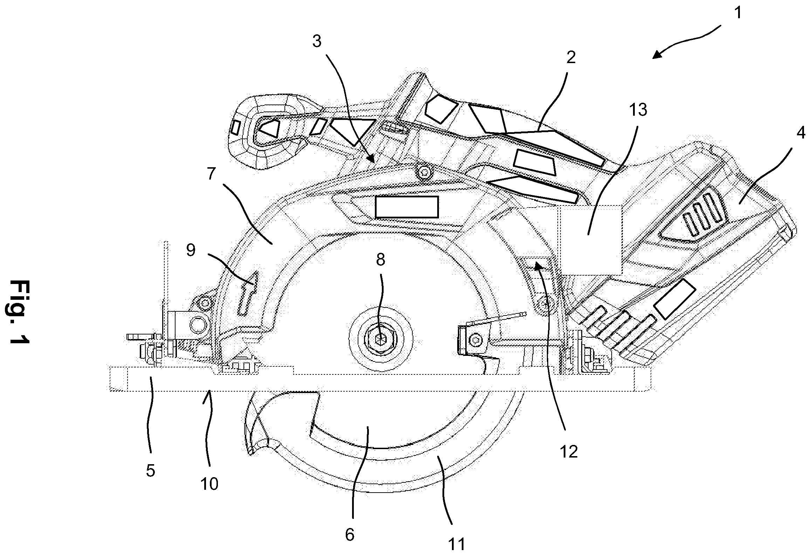

**Fig. 1** zeigt ein als elektrische Handkreissäge **1** ausgebildetes handgeführtes Elektrowerkzeuggerät. Der Aufbau der Handkreissäge 1 entspricht im Wesentlichen dem einer herkömmlichen Handkreissäge mit einem Handgriff **2**, einer Antriebseinheit **3**, die von einer aufladbaren Batterie **4** versorgt wird, einer Auflageplatte **5** und einem als Sägeblatt **6** ausgebildetes Werkzeug, das durch eine Aussparung der Auflageplatte 5 ragt und teilweise von einer oberen Schutzabdeckung **7** bogenförmig umgeben ist. Das Sägeblatt 6 wird von der Antriebseinheit 3 um eine Drehachse **8** in eine Drehrichtung **9** angetrieben. Die Unterseite der Auflageplatte 5 bildet eine Werkstückauflagefläche **10**, mit der die Handkreissäge 1 auf ein zu bearbeitendes Werkstück aufgelegt und an der Werkstückoberfläche entlang geführt werden kann. Das Sägeblatt 6 ist an der Unterseite der Auflageplatte 5 von einer schwenkbaren unteren Schutzabdeckung **11**, die als Pendelschutzhaube ausgebildet ist, umgeben.

Die obere Schutzabdeckung 7 deckt das Sägeblatt 6 im Bereich oberhalb der Auflageplatte 5 ab. Dies dient zum einen dem Schutz des Bedieners vor Verletzungen durch das Sägeblatt 6. Zum anderen wird der Bediener vor umher fliegenden Spänen oder sonstigem Materialabtrag, den das Sägeblatt 6 aus dem Werkstück löst, geschützt. Materialabtrag, der vom Sägeblatt 6 aus dem Werkstück ausgelöst wird, wird durch die Drehung des Sägeblatts 6 direkt nach Verlassen des Werkstücks auf einer tangential zum Sägeblatt 6 verlaufenden Geraden gegen die Schutzabdeckung 7 geschleudert und von dieser zu einer Austrittsöffnung **12** geführt. Die Austrittsöffnung 12 befindet sich hierbei an der dem Handgriff 2 abgewandten Seite der Schutzabdeckung 7. In die Austrittsöffnung 12 der Schutzabdeckung 7 ist ein Absaugadapter **13** eingesteckt und mit der Schutzabdeckung 7 verbunden.

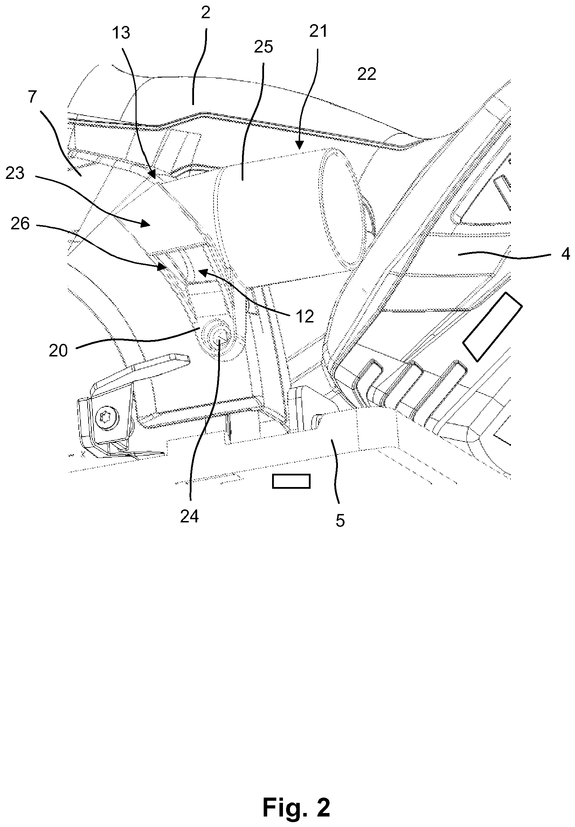

**Fig. 2** zeigt die Schutzabdeckung 7 der Handkreissäge 1 mit dem Absaugadapter 13, der in die Auswurföffnung 12 eingesetzt und mit der Schutzabdeckung 7 verbunden ist.

Der Absaugadapter 13 besteht aus einem Befestigungsabschnitt **20** zur Befestigung des Absaugadapters 13 an der Schutzabdeckung 7, einem Sauganschlussabschnitt **21** mit einer Saugöffnung **22** zum Anschluss einer Absaugeinrichtung und einer Führungseinrichtung **23** zur Führung des Materialabtrags.

Die Handkreissäge 1 ist in einem Saugmodus mit einer Absaugeinrichtung, beispielsweise in Form eines Staubsaugers, betreibbar. Die Absaugeinrichtung erzeugt einen Saugstrom, der den Materialabtrag über den Sauganschlussabschnitt 21 absaugt. Die Handkreissäge 1 ist neben dem Saugmodus in einem zweiten Modus ohne Absaugeinrichtung betreibbar.

Der Befestigungsabschnitt 20 ist mittels einer Verschraubung **24** oder eines vergleichbaren Verbindungsmittels an der Schutzabdeckung 7 geklemmt oder anderweitig befestigt.

Der Sauganschlussabschnitt 21 besteht aus einem Rohrelement **25**, das an einem Ende mit der Führungseinrichtung 23 verbunden ist und an einem anderen End die Saugöffnung 22 aufweist. An das Rohrelement 25 ist ein Absaugschlauch einer Absaugeinrichtung anschließbar. Das Rohrelement 25 weist beispielsweise eine geriffelte Außenfläche auf oder ist mit gewinde- oder schraubenförmig verlaufenden Vertiefungen versehen, die dazu dienen, den Absaugschlauch anzuschließen.

Die Führungseinrichtung 23 weist eine Austrittsöffnung **26** auf, die der Austrittsöffnung 12 in der Schutzabdeckung 7 zugewandt ist und als Austrittsöffnung für den Materialabtrag dient, wenn die Kreissäge 1 ohne Absaugeinrichtung betrieben wird. Ist eine Absaugeinrichtung an den Absaugadapter 13 angeschlossen, wird die Luftzufuhr in den Absaugkanal über die Austrittsöffnung 26 reguliert.

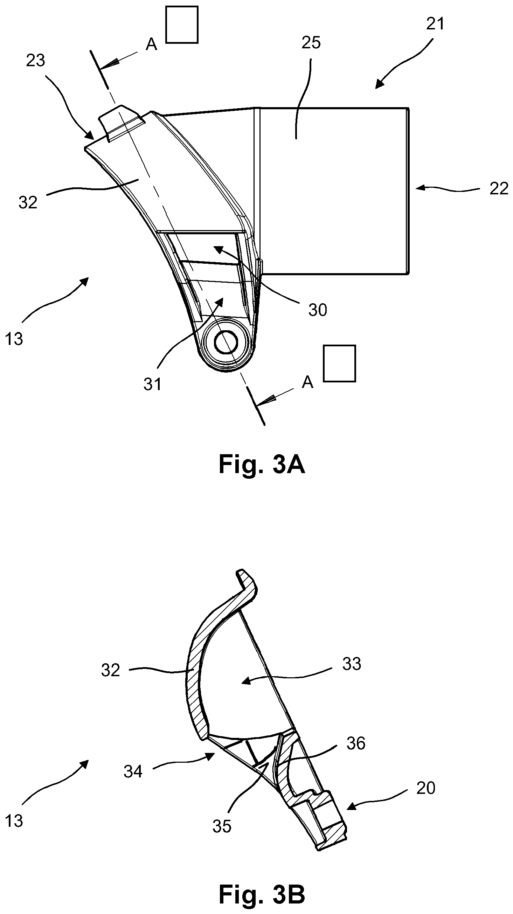

**Fig. 3A** zeigt den Absaugadapter 13, der in die Austrittsöffnung 12 der Schutzabdeckung 7 einsetzbar ist, in einer Seitenansicht und **Fig. 3B** in einem Schnitt durch die Führungseinrichtung 23 entlang der Linie A-A.

Die Führungseinrichtung 23 ist so ausgebildet, dass der Materialabtrag ohne Absaugeinrichtung zuverlässig aus der Schutzabdeckung 7 befördert wird. Dazu sind in der Schutzabdeckung 7 ein erster Führungsabschnitt **30** und im Absaugadapter 13 ein zweiter Führungsabschnitt **31** vorgesehen. Der zweite Führungsabschnitt 31 besteht aus einem Abdeckelement **32**, das ein Volumenelement **33** begrenzt, und einer Leiteinrichtung **34**, die die Richtung des austretenden Materialabtrags festlegt. Die Leiteinrichtung 34 umfasst ein seitliches Leitelement **35** und eine Rampe **36**.

Die Größe des Volumenelementes 33 ist so eingestellt, dass der Materialabtrag möglichst ohne Stau nach außen treten kann. Dazu muss ein angemessener Strömungsquerschnitt bereitgestellt werden.

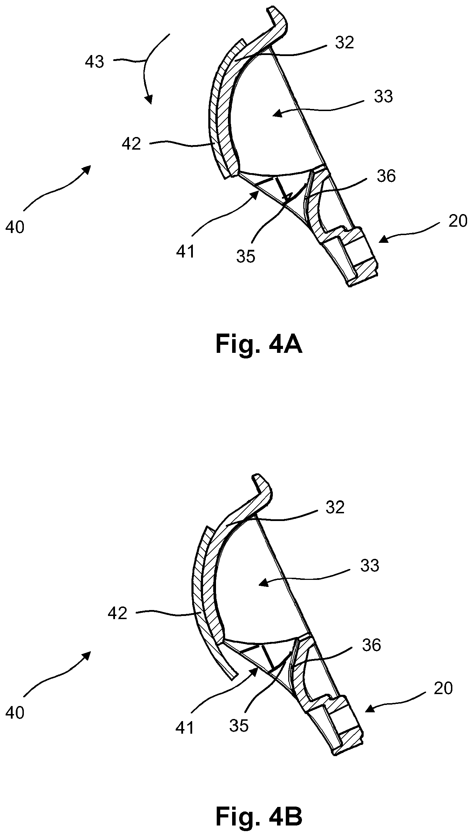

**Fign. 4A****, B** zeigen eine alternative Ausführungsform eines Absaugadapters **40** mit einer verstellbaren Austrittsöffnung **41**.

Die Austrittsöffnung 41 ist über ein Schiebeelement **42** verschließbar. Das Schiebeelement 42 ist oberhalb des Abdeckelementes 32 angeordnet und in einer Verschieberichtung **43** verschiebbar ausgebildet. Fig. 4A zeigt das Schiebeelement 42 in einer ersten Endposition, in der die Austrittsöffnung 41 maximal ist. Fig. 4B zeigt das Schiebeelement 42 in einer Zwischenposition, in der die Austrittsöffnung 41 verkleinert ist.

Die Verstellbarkeit der Austrittsöffnung 41 über das Schiebeelement 42 bietet dem Bediener die Möglichkeit, bei Anschluss einer Absaugeinrichtung an den Absaugadapter 40 die Luftzufuhr in den Absaugkanal zu regulieren und ein Verstopfen des Absaugkanals zu verhindern. Andererseits kann die Austrittsöffnung 41 im Betrieb ohne Absaugeinrichtung so eingestellt werden, dass der Materialabtrag zuverlässig nach außen befördert und ein Verstopfen des Volumenelementes 33 verhindert wird.

## Patentansprüche

1. Handgeführtes Elektrowerkzeuggerät (1) aufweisend ein Werkzeug (6), das von einer Antriebseinheit (3) um eine Drehachse (8) drehbar ist, eine Schutzabdeckung (7), die das Werkzeug (6) zumindest teilweise umgibt, eine Austrittsöffnung (12), die einen vom Werkzeug (6) aus einem zu bearbeitenden Werkstück ausgelösten Materialabtrag aus der Schutzabdeckung (7) befördert, und einen Absaugadapter (13; 40), der mit der Schutzabdeckung (7) verbunden ist und einen Anschlussabschnitt (21) mit einer Saugöffnung (22) zum Anschluss einer Absaugeinrichtung aufweist,
**dadurch gekennzeichnet, dass** der Absaugadapter (13; 40) eine Führungseinrichtung (23) zur Führung des Materialabtrags aufweist, wobei die Führungseinrichtung (23) eine von der Saugöffnung (22) verschiedene Austrittsöffnung (26; 41) aufweist und dass der Absaugadapter (13; 40) in einen ersten Modus oder in einen zweiten Modus betreibbar ist, wobei in dem ersten Modus die Absaugeinrichtung so mit dem Anschlussabschnitt (21) verbunden ist, dass der von der Absaugeinrichtung erzeugte Saugstrom den Materialabtrag durch die Saugöffnung (22) absaugbar ist, und wobei in dem zweiten Modus das Elektrowerkzeuggerät (1) ohne die Absaugeinrichtung betreiben wird, so dass der Materialabtrag aus der Austrittsöffnung (26; 41) erfolgt.

2. Elektrowerkzeuggerät nach Anspruch 1,
**dadurch gekennzeichnet, dass** der Absaugadapter (13; 40) in die Schutzabdeckung (7) integriert oder fest mit der Schutzabdeckung (7) verbunden ist.

3. Elektrowerkzeuggerät nach Anspruch 1,
**dadurch gekennzeichnet, dass** der Absaugadapter (13; 40) mit der Schutzabdeckung (7) lösbar verbindbar ist.

4. Elektrowerkzeuggerät nach einem der Ansprüche 1 bis 3,
**dadurch gekennzeichnet, dass** die Austrittsöffnung (41) mittels eines Schiebeelementes (42) verstellbar ausgebildet ist.

5. Elektrowerkzeuggerät nach einem der Ansprüche 1 bis 4,
**dadurch gekennzeichnet, dass** das Elektrowerkzeuggerät als Kreissäge (1), Winkelschleifer, Trennschleifer oder Schlitzgerät ausgebildet ist.

## Claims

1. Hand-held power tool (1), comprising a tool (6) rotatable about an axis of rotation (8) by a drive unit (3), a protective cover (7) at least partially surrounding the tool (6), an outlet opening (12) for transporting out of the protective cover (7) the material removed by the tool (6) from a workpiece to be machined, and a suction adapter (13; 40) connected to the protective cover (7) and having a connecting portion (21) with a suction opening (22) for the connection of a suction means, **characterised in that** the suction adapter (13; 40) has a guide means (23) for guiding the material removed, the guide means (23) having an outlet opening (26; 41) that is different from the suction opening (22), and that the suction adapter (13; 40) can be operated in a first mode or in a second mode, wherein, in the first mode, the suction means is connected to the connecting portion (21) in such a manner that the suction flow generated by the suction means can draw the material removed through the suction opening (22) and, in the second mode, the power tool (1) is operated without the suction means in such a manner that the material is removed from the outlet opening (26; 41).

2. Power tool according to claim 1, **characterised in that** the suction adapter (13; 40) is integrated into the protective cover (7) or is rigidly connected to the protective cover (7).

3. Power tool according to claim 1, **characterised in that** the suction adapter (13; 40) can be removably connected to the protective cover (7).

4. Power tool according to one of claims 1 to 3, **characterised in that** the outlet opening (41) is designed in such a manner that it can be adjusted by means of a slide element (42).

5. Power tool according to one of claims 1 to 4, **characterised in that** the power tool is designed as a circular saw (1), angle grinder, disc grinder or slitter.

## Revendications

1. Outil électrique tenu à la main (1) comportant un outil (6) qui peut être mis en rotation autour d'un axe de rotation (8) par une unité d'entraînement (3), un couvercle de protection (7) qui entoure au moins partiellement l'outil (6), une ouverture de sortie (12) qui transfère en dehors du couvercle de protection (7) de la matière enlevée d'une pièce à usiner par l'outil (6), et un adaptateur d'aspiration (13 ; 40) qui est relié au couvercle de protection (7) et comporte une partie de raccordement (21) avec une ouverture d'aspiration (22) pour un raccordement à un dispositif d'aspiration,
**caractérisé en ce que** l'adaptateur d'aspiration (13 ; 40) comporte un dispositif de guidage (23) pour guider la matière enlevée, dans lequel le dispositif de guidage (23) comporte une ouverture de sortie (26 ; 41) différente de l'ouverture d'aspiration (22) et **en ce que** l'adaptateur d'aspiration (13 ; 40) peut fonctionner dans un premier mode ou dans un second mode, dans lequel dans le premier mode, le dispositif d'aspiration est relié à la partie de raccordement (21) de telle sorte que le flux d'aspiration généré par le dispositif d'aspiration peut aspirer la matière enlevée à travers l'ouverture d'aspiration (22), et dans lequel dans le second mode, l'outil électrique (1) est entraîné sans le dispositif d'aspiration de telle sorte que l'enlèvement de matière s'effectue à partir de l'ouverture de sortie (26 ; 41).

2. Outil électrique selon la revendication 1, **caractérisé en ce que** l'adaptateur d'aspiration (13 ; 40) est intégré dans le couvercle de projection (7) ou est fixement relié au couvercle de protection (7).

3. Outil électrique selon la revendication 1, **caractérisé en ce que** l'adaptateur d'aspiration (13 ; 40) peut être relié au couvercle de protection (7) de manière amovible.

4. Outil électrique selon l'une des revendications 1 à 3,
**caractérisé en ce que** l'ouverture de sortie (41) est configurée de manière à pouvoir être réglée au moyen d'un élément coulissant (42).

5. Outil électrique selon l'une des revendications 1 à 4,
**caractérisé en ce que** l'outil électrique est configuré comme une scie circulaire (1), une meuleuse d'angle, une meuleuse ou une refendeuse.
